# EUROPÄISCHE PATENTSCHRIFT

(11) **EP 3 115 254 B1**
(45) Veröffentlichungstag und Bekanntmachung des Hinweises auf die Patenterteilung: **03.06.2020**
(21) Anmeldenummer: 16177471.6
(22) Anmeldetag: 01.07.2016
(51) Int. Cl.: B60P 7/08

(54) **ZURREINRICHTUNG**
TIE-DOWN DEVICE
DISPOSITIF D'AMARRAGE

(30) Priorität: 10.07.2015 DE 202015103627 U
(43) Veröffentlichungstag der Anmeldung: 11.01.2017
(73) Patentinhaber: Humbaur Holding GmbH & Co. KG, 86368 Gersthofen (DE)
(72) Erfinder: Humbaur, Ulrich, 86368 Gersthofen (DE)
(74) Vertreter: Ernicke, Klaus Stefan

(56) Entgegenhaltungen:
- EP-A1- 0 670 242
- EP-A2- 2 781 406
- DE-U1- 9 415 316
- DE-U1-202013 100 042
- FR-A1- 2 782 040

## Beschreibung

Die Erfindung betrifft eine Zurreinrichtung mit den Merkmalen im Oberbegriff des Hauptanspruchs.

Aus der DE 198 06 448 A1 und der DE 20 2009 009 270 U1 sind Zurreinrichtungen bekannt, die nur aus einem losen Zurrbügel bestehen, der durch Öffnungen in einem Rahmenprofil oder einem Bordwandprofil gesteckt ist und eine geschlossene Ringform aufweist. Der Zurrbügel kann bedarfsweise aus seiner Ruhestellung in eine Zurrstellung ausgezogen werden. In der Zurrstellung wird er durch die Zurrkräfte und einen Haltegurt gehalten und fällt ansonsten durch sein Eigengewicht zurück in die Ruhestellung.

In der FR 2 782 040 A1 wird ebenfalls eine Zurreinrichtung gezeigt. Das Dokument stellt den nächstliegenden Stand der Technik dar und offenbart den Oberbegriff des Hauptanspruchs. Ebenfalls bekannt ist eine Verzurreinrichtung aus der EP 2 781 406 A2.

Es ist Aufgabe der vorliegenden Erfindung, eine verbesserte Zurrtechnik aufzuzeigen.

Die Erfindung löst diese Aufgabe mit den Merkmalen im Hauptanspruch.

Die beanspruchte Zurrtechnik, d.h. die Zurreinrichtung und das Zurrverfahren, haben verschiedene Vorteile.

Die Zurreinrichtung für ein Fahrzeug weist einen am Fahrzeug zu montierenden Stützbeschlag und einen Zurrbügel auf, wobei der Stützbeschlag für eine verborgene Anordnung am Fahrzeug ausgebildet ist und der Zurrbügel zwischen einer Ruhestellung und einer ausgezogenen Zurrstellung in Ausziehrichtung längsbeweglich und ggf. schwenkbar am Stützbeschlag geführt sowie gegen die Zurrkräfte am Stützbeschlag abstützbar ist. Der Zurrbügel ist in seiner Ruhestellung am Stützbeschlag abgestützt und dabei zur Seite hin quer zur Ausziehrichtung kippfähig am Stützbeschlag geführt.

Das Fahrzeug, insbesondere ein Anhänger, ist mit einer Ladefläche und ggf. einem Rahmen sowie einer in deren Bereich angeordneten Zurreinrichtung versehen, wobei die Zurreinrichtung einen verborgen am Fahrzeug befestigten Stützbeschlag und einen Zurrbügel aufweist, der zwischen einer Ruhestellung und einer ausgezogenen Zurrstellung in Ausziehrichtung längsbeweglich und ggf. schwenkbar am Stützbeschlag geführt und abgestützt ist. Der Zurrbügel ist in seiner Ruhestellung am Stützbeschlag abgestützt und dabei zur Seite hin quer zur Ausziehrichtung kippfähig am Stützbeschlag geführt.

Beim erfindungsgemäßen Zurrverfahren wird dezentral auf einen Bügelkopf eines Zurrbügels der in Ruhestellung befindlichen Zurreinrichtung gedrückt, wobei der Zurrbügel sich durch seine kippfähige Führung an einem Stützbeschlag der Zurreinrichtung schräg stellt und ggf. aus einer Öffnung in der Ladefläche oder am Rahmen des Fahrzeugs auftaucht. Er wird dann gegriffen und aus der Ruhestellung in die Zurrstellung oder in eine nach unten abgestützte Zwischenstellung bewegt. Der schräg gestellte bzw. gekippte Zurrbügel kann insbesondere an einem äußeren Überstand des Bügelkopfs gegriffen werden.

In einer bevorzugten Ausführung der Zurreinrichtung ist der Stützbeschlag für eine versenkte Montage unterhalb einer Ladefläche oder eines Rahmens des Fahrzeugs ausgebildet.

Die Zurrtechnik bietet einerseits die Möglichkeit, einen Zurrbügel mit seinem Bügelkopf versenkt und relativ dicht im Ladeflächenbereich eines Fahrzeugs unterzubringen. Die weitgehend dichte Anordnung verhindert das Eindringen von Schüttgütern in den Zurrbügelbereich. Der versenkte Zurrbügel mit ebener Oberfläche und bündigem Anschluss zur Ladefläche erlaubt ein widerstandsfreies Abrutschen solcher Schüttgüter in Kippstellung der Ladefläche. Die Ladefläche kann leichter sauber gehalten werden. Außerdem wird ein lokales Anlagern und Anbacken von Schüttgütern an der Zurreinrichtung verhindert und deren Funktionsfähigkeit sowie Bedienbarkeit gesichert.

Andererseits bietet die beanspruchte kippfähige Führung des Zurrbügels an einem Stützbeschlag in der Ruhestellung die Möglichkeit, durch dezentralen Druck auf die Oberseite des Zurrbügels den Bügelkopf schräg zu stellen und dadurch besser greifen zu können. Er kann dann leicht aus der Ruhestellung herausgezogen werden. Hierfür ist eine Ausbildung des Zurrbügels mit einem Bügelkopf und einem darunter befindlichen, bevorzugt ringförmigen Rückhalter von Vorteil, wobei der Bügelkopf breiter als der Rückhalter ist und einen seitlichen Überstand aufweist. Der beim Kippen hoch stehende Überstand erleichtert das Greifen. Diese Gestaltung vereinigt die Vorteile der dichten und bündigen Anordnung des Zurrbügels im Ladeflächenbereich mit der trotzdem gegebenen leichten und sicheren Handhabung.

Die Ladefläche eines Fahrzeugs kann sowohl für Schüttgüter, als auch für Stückgüter genutzt werden. Für den Schüttguttransport, bei dem ein Zurrbügel meistens nicht benötigt wird, kann dieser die versenkte und abgedichtete Stellung ohne Beeinträchtigung der Transport- und Abkippfunktion einnehmen. Für andere Gütertransporte steht der Zurrbügel uneingeschränkt zur Verfügung. Die versenkte Anordnung ist außerdem günstig, um auch für einen Stückguttransport eine ebene Ladefläche mit voller Breite zu bieten und Stückgüter über den versenkten Zurrbügel hinweg verschieben zu können.

Für die kippfähige Abstützung und Lagerung des Zurrbügels, insbesondere seines Bügelkopfes, kann der Stützbeschlag in geeigneter Weise ausgebildet sein. Er bietet einen entsprechend abgestimmten Gegenhalter für den Bügelkopf mit einem seitlichen Freiraum, der in Ruhestellung eine Kippbewegung des Zurrbügels und dessen leichtes manuelles Greifen ermöglicht. Der Gegenhalter hat eine Doppelfunktion für die Lagerung und Abstützung des Zurrbügels in der Ruhestellung und die Abstützung des Zurrbügels in der ausgezogenen Zurrstellung gegen die einwirkenden Zurrkräfte.

In einer Ausführungsform weist der Stützbeschlag einen Gegenhalter zur Abstützung des Zurrbügels in Ruhe- und Zurrstellung auf, wobei der Gegenhalter eine verminderte Stützbreite besitzt, die den Zurrbügel lokal beschränkt und seitlich kippfähig abstützt. Zudem kann der Stützbeschlag einen mit Abstand unterhalb des Gegenhalters angeordneten Stützsockel für die untere Abstützung des Zurrbügels in einer teilweise ausgezogenen Zwischenstellung aufweisen.

Der Gegenhalter und der Stützsockel können in Ruhestellung in der Öffnung des Rückhalters und mit seitlichem Abstand zu Seitenarmen des Rückhalters angeordnet sein. Dies ist vorteilhaft für die seitliche Kippmöglichkeit. Der besagte seitliche Abstand bietet Raum für die Kippbewegung.

Besonders günstig ist eine fakultative Gestaltung, bei welcher der Stützsockel eine geringere Breite und einen größeren Abstand zu den Seitenarmen als der Gegenhalter aufweist. Der Stützsockel kann eine sich verjüngende Keilform haben, die den Freiraum für die seitliche Kippbewegung des Zurrbügels noch weiter vergrößert.

Günstig kann ferner eine zentrale Anordnung des Gegenhalters gegenüber einem Bügelkopf des Zurrbügels und eine Stützbreite des Gegenhalters sein, die kürzer als der Bügelkopf ist.

Die beanspruchte Zurrtechnik bietet die Möglichkeit, den Zurrbügel in einer teilweise ausgezogenen Zwischenstellung zu halten und temporär zu arretieren. Dies ist eine Bereitschaftsstellung, in der ein Haken oder ein anderes Befestigungselement eines Zurrgeschirrs oder einer anderen Ladungssicherung leicht und bequem mit dem bereitstehenden und bevorzugt ringförmigen Zurrbügel verbunden werden kann. Beim Festzurren kann dann der Zurrbügel von selbst und betriebssicher in die Zurrstellung am Gegenhalter gezogen werden. Hierfür ist eine eng zum Gegenhalter benachbarte Anordnung eines Stützsockels für die Zwischenstellung von Vorteil. Formschlüssige und bevorzugte rinnenförmige Aufnahmen am Gegenhalter und Stützsockel halten den Zurrbügel in der jeweiligen Stellung in Position. Ein gerundeter Verbindungssteg des Rückhalters erlaubt dabei auch in der Zwischenstellung eine seitliche Kipplage des Zurrbügels.

Der Stützbeschlag kann einen Korpus mit dem Gegenhalter und einem dort seitlich anschließenden Freiraum aufweisen. Der Korpus des Stützbeschlags kann eine Stützwand und davon wegragende seitlich distanzierte Stützarme aufweisen. Der Bügelkopf kann zwischen den Stützarme aufgenommen sein.

Die Stützwand kann zur Anlage und Befestigung am Fahrzeug ausgebildet sein. Alternativ kann die Befestigung des Korpus am Fahrzeug über die Frontseiten der Stützarme und den Gegenhalter erfolgen, wobei die Stützwand mit Distanz zur Befestigungsstelle angeordnet ist.

Der Stützsockel kann getrennt vom Gegenhalter angeordnet sein. Beide können dabei eigenständig mit der Stützwand verbunden sein. Alternativ kann der Stützsockel hängend am Gegenhalter und mit Distanz zur Stützwand angeordnet sein, wobei der Gegenhalter mit der Stützwand verbunden ist.

In einer Ausgestaltung weist der Zurrbügel im Bereich des Bügelkopfs eine Ummantelung aus Kunststoff auf. Diese mindert die Geräuschemission und bietet einen Klapperschutz. Ein ummantelter Bügelkopf dichtet außerdem die Durchgangsöffnungen am Fahrzeug besser ab und bietet einen verbesserten Korrosionsschutz. Dies ist insbesondere für den Einsatz bei Transportfahrzeugen für Schuttgüter von Vorteil. Ferner lässt sich der Zurrbügel am Bügelkopf besser und sicherer greifen. Ein ansonsten metallischer Zurrbügel ist für die Kraftaufnahme von Vorteil.

Die beanspruchte Zurrtechnik bietet auch Vorteile für die Gestaltung und Funktion eines damit ausgerüsteten Fahrzeugs. Dieses ist für den Transport von in der Konsistenz unterschiedlichen Gütern, insbesondere Schütt- und Stückgütern, geeignet. Es kann als Multifunktionsfahrzeug ausgebildet sein. Dieses kann für den Transport von in der Konsistenz unterschiedlichen Gütern, insbesondere Schütt- und Stückgütern, vorgesehen und ausgebildet sein.

Das Fahrzeug kann eine Kippeinrichtung für die Ladefläche aufweisen. An der Ladefläche können Aufbauwände oder Bordwände angeordnet sein.

Die kippfähige Lagerung und Führung des Zurrbügels am Stützbeschlag und die teilweise ausgezogene und nach unten abgestützte Zwischenstellung für den Zurrbügel stellen eine eigenständige Erfindung dar, die auch in Kombination mit einer anderen konventionellen Ausbildung der Zurreinrichtung eingesetzt werden kann. Die kippfähige Lagerung und Führung am Gegenhalter kann ohne die Zwischenstellung auskommen.

Ferner stellen auch die versenkte und dichte Anordnung des Zurrbügels, insbesondere seines Bügelkopfes, in einer bevorzugt schlitzartigen Öffnung an der Ladefläche oder einem Rahmen des Fahrzeugs einerseits sowie die an der Oberseite bündig versenkte Anordnung des Zurrbügels, insbesondere seines Bügelkopfes, in der besagten Öffnung und jeweils in Ruhestellung eigenständige Erfindungen dar. Sie sind unabhängig voneinander und auch unabhängig von der kippfähigen Lagerung und Führung des Zurrbügels sowie der besagten Zwischenstellung des Zurrbügels benutzbar.

Eine solche eigenständige Zurreinrichtung für ein Fahrzeug weist einen am Fahrzeug zu montierenden Stützbeschlag und einen Zurrbügel auf, wobei der Stützbeschlag für eine verborgene Anordnung am Fahrzeug ausgebildet ist und der Zurrbügel zwischen einer Ruhestellung und einer ausgezogenen Zurrstellung in Ausziehrichtung längsbeweglich und ggf. schwenkbar am Stützbeschlag geführt sowie gegen die Zurrkräfte am Stützbeschlag abstützbar ist, wobei der Stützbeschlag, insbesondere der Gegenhalter, und der Zurrbügel, insbesondere der Bügelkopf, derart aufeinander abgestimmt sind, dass der Bügelkopf in Ruhestellung versenkt und im wesentlichen dicht in einer durchgehenden Öffnung der Ladefläche oder eines Rahmens des Fahrzeugs angeordnet ist.

Eine andere eigenständige Zurreinrichtung für ein Fahrzeug weist einen am Fahrzeug zu montierenden Stützbeschlag und einen Zurrbügel auf, wobei der Stützbeschlag für eine verborgene Anordnung am Fahrzeug ausgebildet ist und der Zurrbügel zwischen einer Ruhestellung und einer ausgezogenen Zurrstellung in Ausziehrichtung längsbeweglich und ggf. schwenkbar am Stützbeschlag geführt sowie gegen die Zurrkräfte am Stützbeschlag abstützbar ist, wobei ein Gegenhalter des Stützbeschlags und ein Bügelkopf des Zurrbügels derart aufeinander abgestimmt sind, dass der Bügelkopf in Ruhestellung mit seiner bevorzugt ebenen Oberseite bündig mit der Oberseite einer Ladefläche oder eines Rahmens des Fahrzeugs in einer dortigen durchgehenden Öffnung angeordnet ist.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen Anhänger mit einer Ladefläche und einem Rahmen sowie einer Zurreinrichtung in einer teilweise geöffneten perspektivischen Darstellung,
- Figur 2 und 3:: perspektivische Ansichten einer ersten Variante der Zurreinrichtung in Ruhestellung mit abgesenktem Zurrbügel in Außen- und Innenansicht,
- Figur 4 und 5:: einen Stützbeschlag und den Zurrbügel dieser Zurreinrichtung in einer Einbaustellung in Seitenansicht und in gemäß Pfeil V geklappter Seitenansicht,
- Figur 6 und 7:: perspektivische Darstellungen des Stützbeschlags und des Zurrbügels,
- Figur 8 und 9:: perspektivische Außen- und Innenansichten der Zurreinrichtung in Ruhestellung und gekippter Lage,
- Figur 10 und 11:: perspektivische Innen- und Außenansichten der Zurreinrichtung mit Zwischenstellung des Zurrbügels,
- Figur 12 und 13:: perspektivische Innen- und Außenansichten der Zurreinrichtung mit dem Zurrbügel in Zurrstellung,
- Figur 14 und 15:: eine zweite Variante der Zurreinrichtung an einem Fahrzeug in ausschnittsweisen perspektivischen Ansichten und verschiedenen Stellungen,
- Figur 16 bis 20:: verschiedene Ansichten dieser Zurreinrichtung und
- Figur 21 bis 23:: verschiedene Einzelansichten des Stützbeschlags und des Zurrbügels der zweiten Variante.

Die Erfindung betrifft eine Zurreinrichtung (1) und ein Zurrverfahren. Die Erfindung betrifft ferner ein mit einer Zurreinrichtung (1) ausgerüstetes Fahrzeug (2).

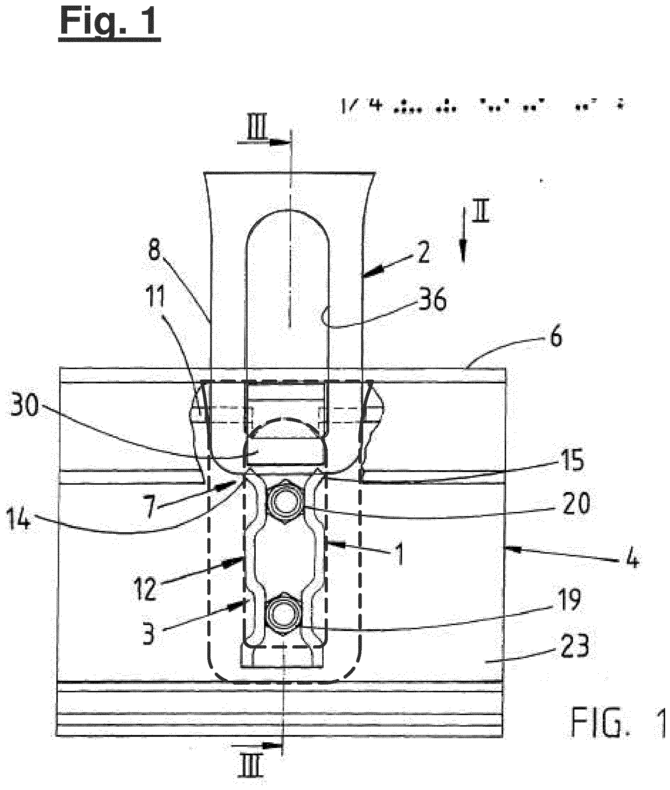

Figur 1 zeigt ein solches Fahrzeug (2), welches beispielhaft als Anhänger ausgebildet ist und alternativ ein Kraftfahrzeug sein kann. Das Fahrzeug (2) besitzt ein Chassis (29) mit einem Fahrwerk (30) mit einer oder mehreren Achsen sowie einer Zugdeichsel (33) mit einer Anhänge- und Bremsvorrichtung. Das Fahrzeug (2) weist eine Ladefläche (3) und einen umgebenden Rahmen (4) sowie randseitige Bordwände (31) auf.

Am Randbereich der planen Ladefläche (3) befinden sich ein oder mehrere Zurreinrichtungen (1) die bevorzugt an den parallel zur Längsachse (34) ausgerichteten Längsseiten der Ladefläche (3) oder am umgebenden Rahmen (4) randseitig angeordnet sind. Die Zurreinrichtungen (1) können sich alternativ oder zusätzlich im inneren Ladebodenbereich befinden. Der Rahmen (4) kann die von einer Bodenplatte gebildete Ladefläche (3) umfangseitig begrenzen. Er kann mit seiner Oberseite bündig mit der Bodenplatte angeordnet sein und dadurch einen randseitigen Teil der Ladefläche (3) bilden.

Das Fahrzeug (2) und die Ladefläche (3) können wahlweise zum Transport von unterschiedlichen Ladungen bzw. Gütern, insbesondere Schüttgütern und Stückgütern dienen. In der gezeigten Ausführung weist das Fahrzeug (2) einen Pritschenaufbau mit den besagten Bordwänden (31) auf. Alternativ kann ein anderer Aufbau, z.B. ein Kastenaufbau oder Muldenaufbau oder eine Plattform ohne seitliche Wände vorhanden sein. Die Ladefläche (3) kann starr oder beweglich, insbesondere um eine oder mehrere Achsen kippbar, auf dem Chassis (29) angeordnet sein.

Figur 1 zeigt einen Anhänger (2), der als Multifunktionsanhänger ausgebildet ist und eine Kippeinrichtung (32) für die Ladefläche (3) aufweist. Er ist zum besagten Transport unterschiedlichster Arten von Gütern geeignet. Die Zurreinrichtungen (1) sind in und unterhalb der Ladefläche (3) bzw. der Rahmenoberseite angeordnet.

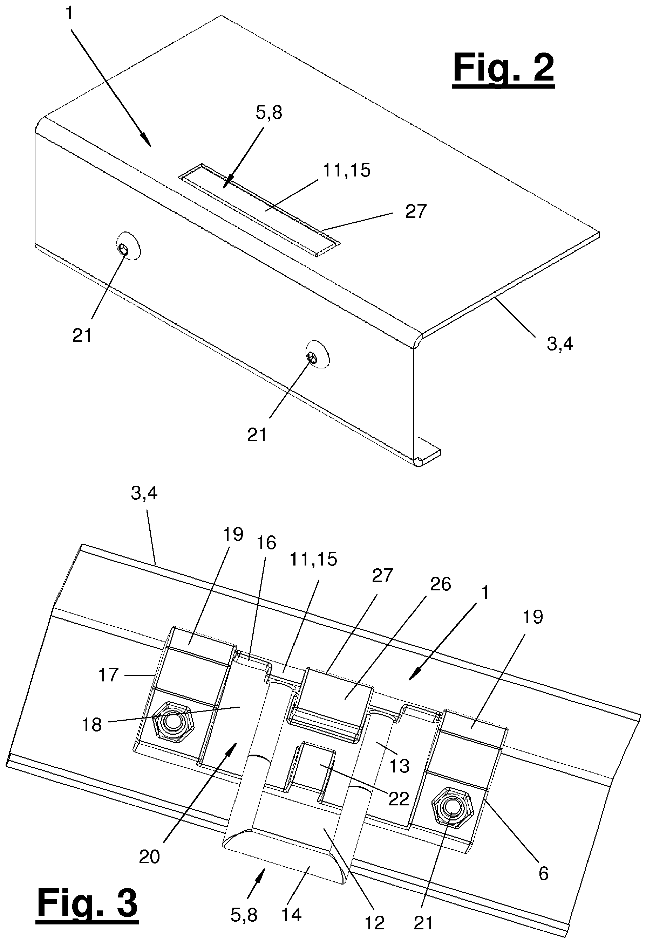

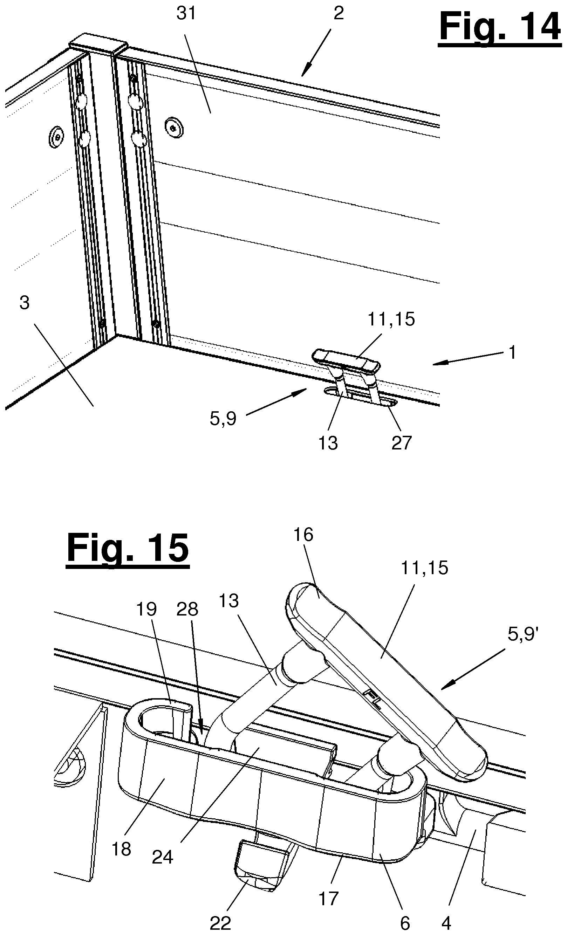

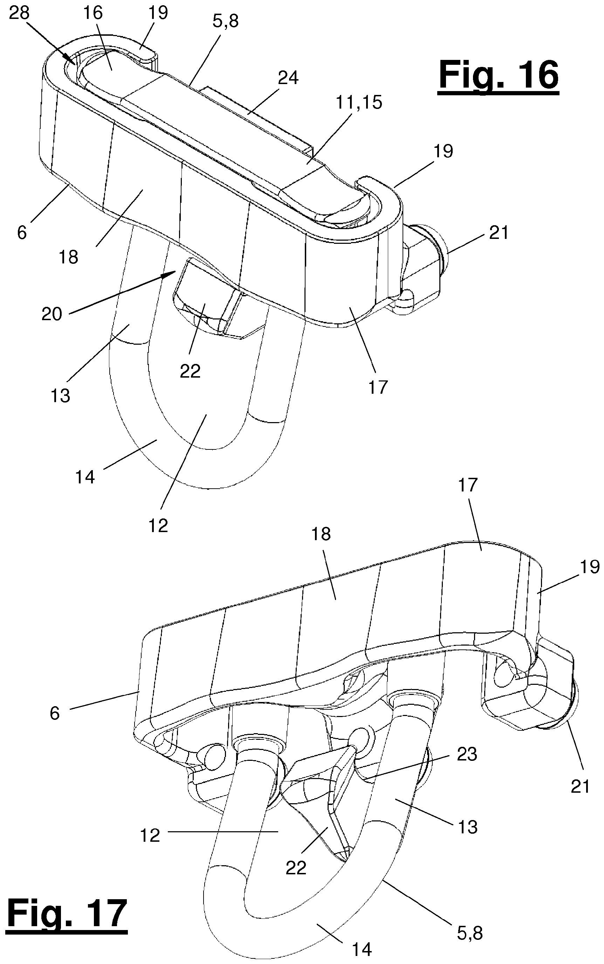

Figur 2 bis 13 zeigen eine erste Variante der Zurreinrichtung (1). In Figur 14 bis 23 eine zweite Variante dargestellt. Gleiche Bezugsziffern bezeichnen gleiche oder ähnliche Teile.

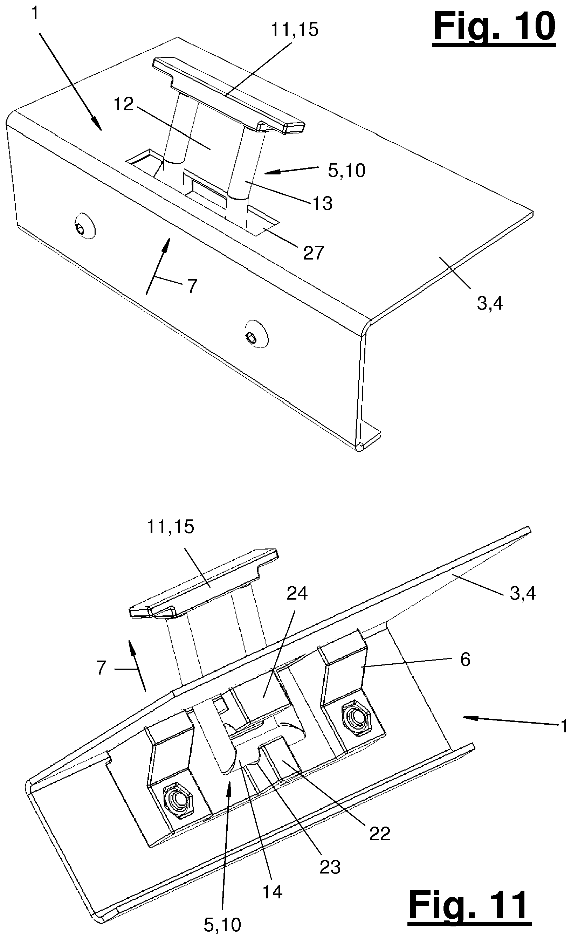

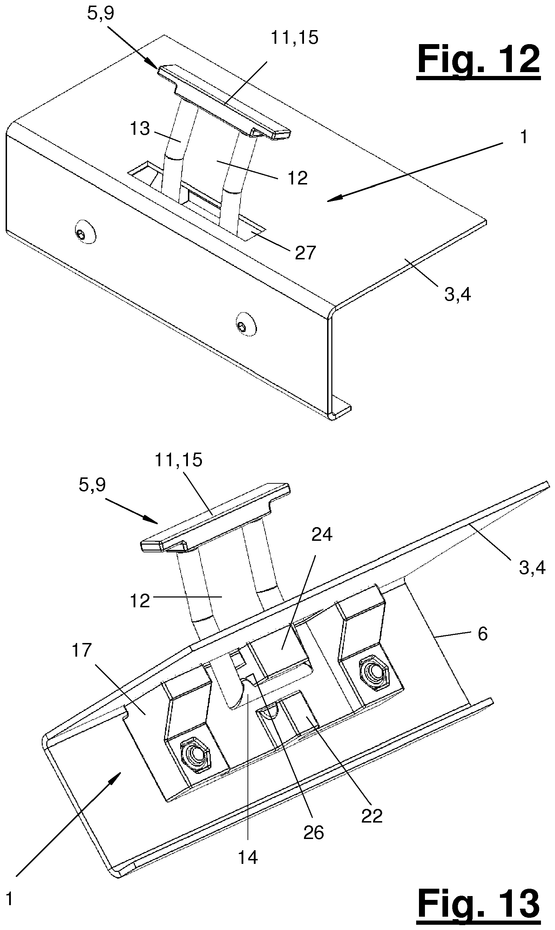

Wie Figur 2 bis 13 verdeutlichen, bestehen die Zurreinrichtungen (1) jeweils aus einem Stützbeschlag (6) und einem Zurrbügel (5). Der Stützbeschlag (6) ist dazu ausgebildet, verborgen am Fahrzeug und insbesondere unterhalb der Ladefläche (3) bzw. der Oberseite des Rahmens (4), angeordnet und montiert zu werden. Der Zurrbügel (5) ist zwischen einer abgesenkten Ruhestellung (8) und einer ausgezogenen Zurrstellung (9) beweglich am Stützbeschlag (6) geführt und kann am Stützbeschlag (6) auch gegen die von einem Zurrgeschirr oder einer anderen Ladesicherung ausgeübten Zurrkräfte abgestützt werden. Der Zurrbügel (5) ist in einer Ausziehrichtung (7) längsbeweglich und ggf. schwenkbar am Stützbeschlag (6) geführt. Er kann dabei die in Figur 2 und 3 dargestellte Ruhestellung (8) und die in Figur 12 und 13 gezeigte Zurrstellung (9) sowie eine Zwischenstellung (10) gemäß Figur 10 und 11 einnehmen. In der Zwischenstellung (10) ist der Zurrbügel (5) teilweise ausgezogen und nimmt dabei eine abgestützte Bereitschaftstellung ein, die den externen Zugang zum Zurrbügel (5) und die Befestigung eines Zurrgeschirrs, z.B. eines Spanngurts, oder einer anderen Art von Ladungssicherung erleichtert. In den ausgezogenen Stellungen (9,10) ragt der Zurrbügel (5) zumindest teilweise aus der Ladefläche (3) bzw. dem Rahmen (4) .

In der in Figur 1 bis 3 gezeigten Ruhestellung (8) ist der Zurrbügel (5) in einer bevorzugt schlitzartigen und länglichen Öffnung (27) der Ladefläche (3) bzw. des Rahmens (4) versenkt angeordnet. Die Öffnung (27) ist eine Durchbrechung bzw. eine Durchgangsöffnung. Der Zurrbügel (5) wird dabei vorzugsweise dicht und mit einem engen seitlichen Abstand zu den Öffnungsrändern aufgenommen. Schüttgüter können dank der dichten Lage nicht durch die Öffnung (27) fallen.

Andererseits schließt der Zurrbügel (5) mit seiner bevorzugt ebenen Oberseite bündig an die Oberseite der Ladefläche (3) bzw. des Rahmens (4) an. Hierdurch entsteht eine im Zurrbereich ebene Oberfläche, die bei Nichtbenutzung der Zurreinrichtung (1) das Verschieben einer Ladung, insbesondere von Stückgütern, bis zum äußeren Rand der Ladefläche (3) bzw. des Rahmens (4) ermöglicht.

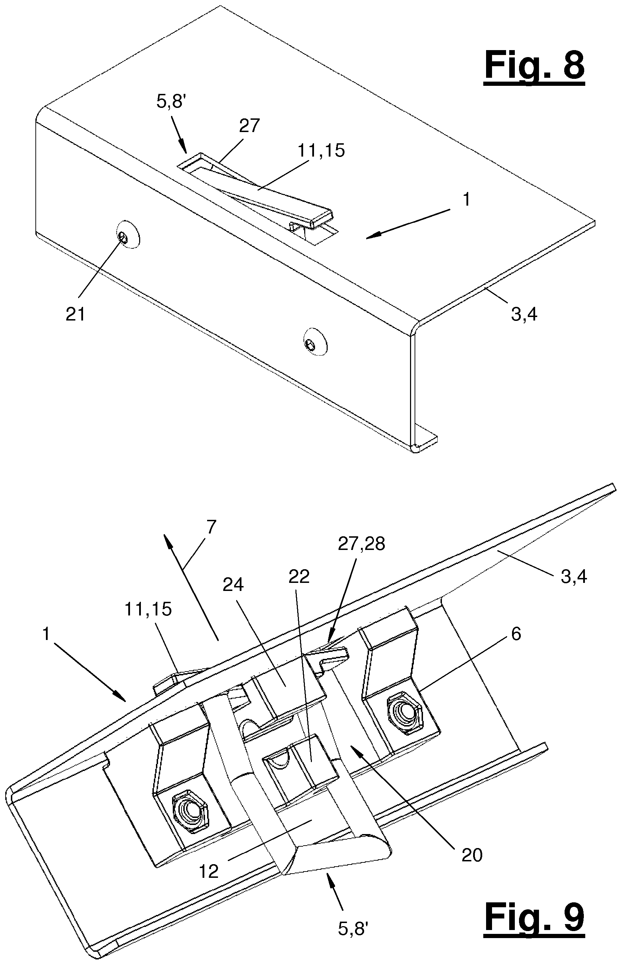

Der Zurrbügel (5) ist in seiner Ruhestellung (8) am Stützbeschlag (6) abgestützt. Er ist dabei zur Seite hin kippfähig geführt und abgestützt. Die kippfähige Führung besteht quer zur Ausziehrichtung (7). Beim Kippen stellt sich der Zurrbügel (5) am Stützbeschlag (6) und in der Öffnung (27) schräg, wobei er am eine Öffnungsende eintaucht und am anderen Öffnungsende herausragt. Figur 8 und 9 zeigen die gekippte Ruhestellung (8').

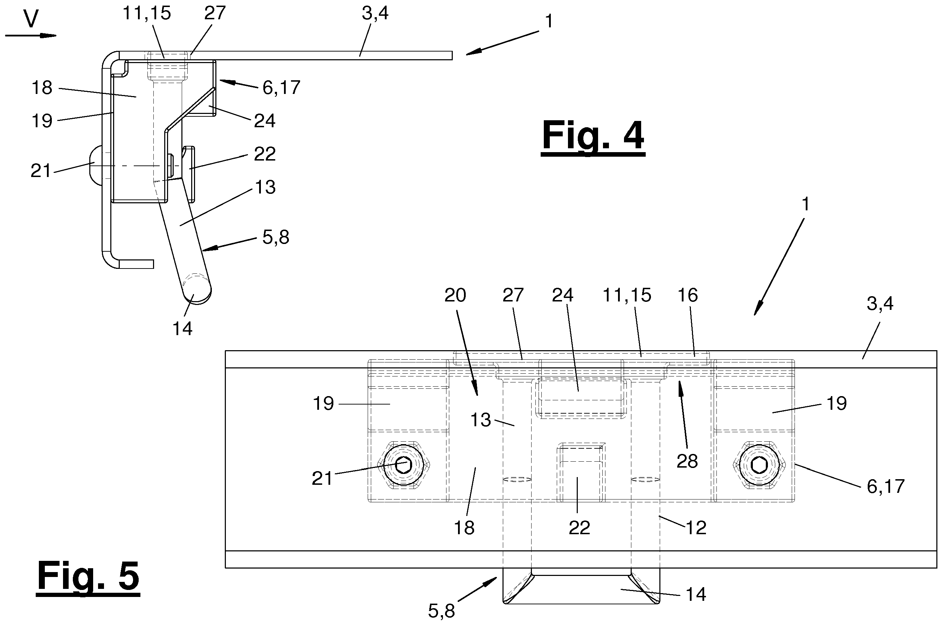

Figur 4 bis 7 verdeutlichen die Gestaltung des Stützbeschlags (6) und des Zurrbügels (5). Der Stützbeschlag (6) weist einen Gegenhalter (24) zur Abstützung des Zurrbügels (5) in dessen Ruhe- und Zurrstellung (8,9) auf. Zur Lagestabilisierung des Zurrbügels (5) kann der Gegenhalter (24) an der Oberseite und Unterseite jeweils eine geeignete formschlüssige Aufnahme (25,26), insbesondere in Form einer Nut aufweisen. Die Aufnahmen (25,26) sind in der Formgebung an die betreffenden Zurrbügelteile angepasst.

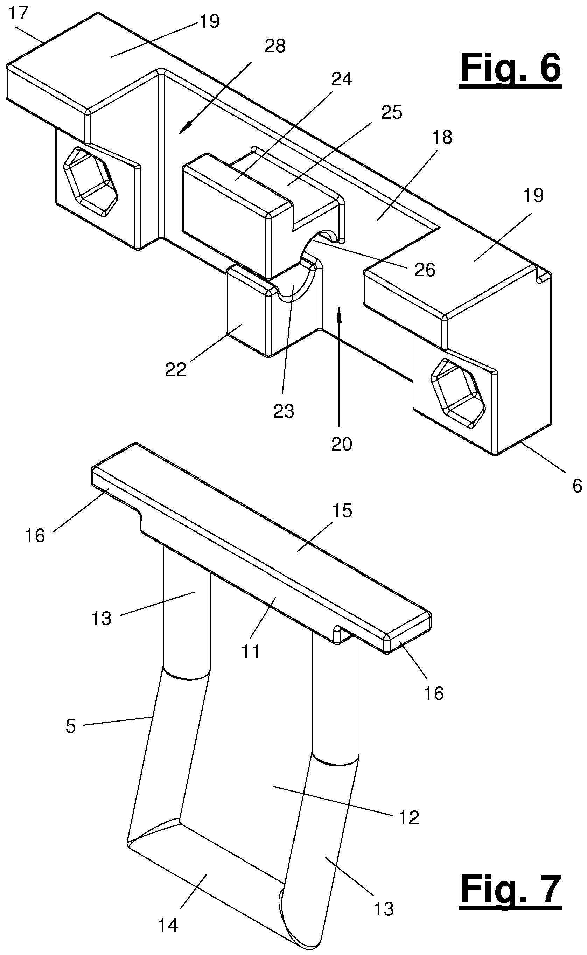

Die untere Aufnahme bzw. Nut (26) ist gerundet. Die Rundung kann gemäß Figur 6 im Querschnitt bestehen. Die Längserstreckung kann gerade oder ebenfalls gerundet sein. Die Aufnahme bzw. obere Nut (25) hat z.B. eine gerade Längserstreckung und im Querschnitt eine Rechteckform.

Der Gegenhalter (24) besitzt eine verminderte Stützbreite, die den Zurrbügel (5) lokal beschränkt, vorzugsweise zentral sowie seitlich kippfähig abstützt. Der aufgenommene Zurrbügel (5) ragt beidseitig über die Ränder des Gegenhalters (24) hinaus und kann dadurch mit einer in Figur 8 und 9 gezeigten Kippbewegung um den Gegenhalter (24) drehen. Der Stützbeschlag (6) weist außerdem seitlich, vorzugsweise beidseits, vom Gegenhalter (24) einen Freiraum (20) für die besagte Kippbewegung des Zurrbügels (5) auf. Der Freiraum (20) kann nach unten durchgängig offen sein.

Die Kippbewegung kann gemäß Figur 8 und 9 durch ein außermittiges Niederdrücken des Zurrbügels (5) von Hand oder mit einem Werkzeug erfolgen, wobei das andere Zurrbügelende nach oben schwenkt und aus der Öffnung (27) auftaucht, so dass es manuell bequem und sicher gegriffen werden kann. Der Zurrbügel (5) kann dann aus der Ruhestellung (8) in Richtung (7) und vorzugsweise nach oben herausgezogen werden.

Der Zurrbügel (5) hat gemäß Figur 7 an der Oberseite einen Bügelkopf (11), unter dem ein bevorzugt ringförmiger und geschlossener Rückhalter (12) mit einer innenseitigen freien Öffnung angeordnet ist. Der Rückhalter (12) hat vorzugsweise eine in Richtung (7) längliche Form und weist zwei am Bügelkopf (11) anschließende Seitenarme (13) und an deren unteren freien Enden einen z.B. geraden Verbindungssteg (14) auf. Die Seitenarme (13) können eine gerade Erstreckung oder eine in Figur 4 und 7 dargestellte, im mittleren Bereich gebogene oder geknickte Form aufweisen. Sie können dadurch mit dem Bügelkopf (11) in ausgezogener Stellung (9,10) eine zur Fahrzeuginnenseite geneigte Lage einnehmen.

Der Bügelkopf (11) ist breiter als der Rückhalter (12) und weist an einer oder beiden Seiten einen seitlichen Überstand (16) auf. Der Bügelkopf (11) wird von einer oberen Jochplatte (15) gebildet, die eine im wesentlichen quaderförmige und an den Überständen (16) eingezogene bzw. abgestufte Form aufweist, die das Greifen in Kippstellung erleichtert. Die Oberseite des Bügelkopfs (11) bzw. der Jochplatte (15) ist vorzugsweise eben. Der Bügelkopf (11) bzw. seine Jochplatte (15) und die Öffnung (27) haben eine aneinander angepasste Formgebung, die z.B. rechteckig ist. In der abgestützten Ruhestellung (8) sind nur geringe Abstände zwischen den Bügelkopfrändern und den Öffnungsrändern vorhanden.

Die z.B. im Querschnitt gerundeten Seitenarme (13) sind an der Unterseite des Bügelkopfs (11) bzw. der Jochplatte (15) befestigt, z.B. stumpf angeschweißt. Die erwähnte obere Aufnahme (25) am Gegenhalter (24) ist auf die Form des Bügelkopfes (11) bzw. der Jochplatte (15) angepasst. Der untere Verbindungssteg (14) hat beispielsweise eine runde Formgebung, an welche die untere gerundete Aufnahme (26) des Gegenhalters (24) angepasst ist.

Der Gegenhalter (24) ist zentral gegenüber dem Bügelkopf (11) und innerhalb der Öffnung des Rückhalters (12) angeordnet. Er hat dabei einen seitlichen Abstand zu den Seitenarmen (13). Dieser ist so groß, dass er eine signifikante Kippbewegung und Schrägstellung des Zurrbügels (5) ermöglicht. Außerdem ist die Stützbreite des Gegenhalters (24) an der oberen Aufnahme (25) in der erwähnten Weise erheblich kürzer als der Bügelkopfbereich zwischen den Seitenarmen (13).

Der Stützbeschlag (6) weist einen Korpus (17) mit einer rückseitigen Stützwand (18) und dem erwähnten Gegenhalter (24) auf. Ferner sind an den beidseitigen Rändern der Stützwand (18) gerade oder abgewinkelte Stützarme (19) angeordnet, die von der Stützwand (18) quer abstehen und die einen gegenseitigen Abstand aufweisen. Der Gegenhalter (24) ist zentral zwischen den Stützarmen (19) an der Stützwand (18) befestigt und hat beidseits einen größeren Abstand von den Stützarmen (19), der den besagten Freiraum (20) bildet. Der Gegenhalter (24) ragt ebenfalls quer von dieser ab. Die Auskraglänge des Gegenhalters (24) entspricht der Auskraglänge der Stützarme (19) in ihrem oberen Bereich.

Der Stützbeschlag (6) bzw. sein Korpus hat im wesentlichen eine L-Form oder Winkelform, die von der Stützwand (18) und den Stützarmen (19) bestimmt ist. Die L-Form ist nach vorn und nach unten offen.

Der Stützbeschlag (6) wird vorzugsweise in einer Kehlung am Rand der abgekanteten Ladefläche (3) oder des Rahmens (4) innenseitig und verborgen mittels Schrauben, Nieten oder anderer Befestigungsmittel (21) montiert und befestigt. Figur 4 und 5 zeigen diese Anordnung. Die Stützarme (19) liegen an der Unterseite des horizontalen Bereichs der Ladefläche (3) bzw. des Rahmens (4) an, wobei die Stützwand (18) an einem hiervon abgekanteten vertikalen Flächen- oder Rahmenschenkel anliegt. Hier befinden sich auch die Befestigungselemente (21). Die Zurrkräfte können über die Stützarme (19) an den horizontalen und vertikalen Bereichen der Ladefläche (3) und/oder des Rahmens (4) abgestützt werden.

Der Stützbeschlag (6) bzw. Korpus (17) bildet an der Oberseite durch die Stützwand (18) und die seitlichen Stützarme (19) einen z.B. rechteckigen Ausschnitt (28), der bevorzugt im Wesentlichen der Form und den Abmessungen der Öffnung (27) entspricht. Der Bügelkopf (11), insbesondere seine Jochplatte (15) mit den ein- oder beidseitigen Überständen (16), entspricht ebenfalls in Form und Abmessung dem Ausschnitt (28) und ist in Ruhestellung (8) im Ausschnitt (28) bzw. zwischen den Seitenarmen (19) aufgenommen. Dies erfolgt bevorzugt mit engem Anschluss unter Wahrung der Kippfähigkeit.

Der Gegenhalter (24) erstreckt sich quer über die Öffnungsweite der Öffnung (27) und schließt am gegenüber liegenden Öffnungsrand an, sodass der Zurrbügel (5) nicht vollkommen aus der Öffnung (27) herausgezogen werden kann.

Der Stützbeschlag (6) weist einen Stützsockel (22) für den Zurrbügel (5) in der besagten Zwischenstellung (10) auf. Der Stützsockel (22) ist mit Abstand unterhalb des Gegenhalters (24) und vorzugsweise zentral am Stützbeschlag (6) angeordnet. Der Abstand ist gerade so groß, dass er den Verbindungssteg (14) durchlässt.

Der Stützsockel (22) ist am unteren Rand der Stützwand (18) angeordnet und ragt von dieser quer ab, wobei seine Auskraglänge kürzer als diejenige des Gegenhalters (24) ist. Der Rückhalter (12) oder Bügelring hat eine so große Länge in Ausziehrichtung (7), dass er in Ruhestellung (8) den Stützsockel (22) an der Unterseite mit Abstand untergreift. Der Stützsockel (22) weist an der Oberseite ebenfalls eine Aufnahme (23) auf. Diese ist vorzugweise nuten- oder rinnenförmig gestaltet und hat eine an den Verbindungssteg (14) angepasste Formgebung.

Der Stützsockel (22) hat vorzugsweise eine geringere Breite als der Gegenhalter (24). Hierdurch wird der seitliche Freiraum (20) für die Kippbewegung des Zurrbügels (5) und den Schwenkweg der Seitenarme (13) vergrößert. Der Kippwinkel kann dadurch relativ groß sein, ohne dass der Zurrbügel (5) am Stützbeschlag (6) anschlägt. Figur 8 und 9 zeigen diese Situation und die gekippte Ruhestellung (8').

Wie Figur 10 und 11 verdeutlichen, wird der Zurrbügel (5) bei seiner Aktivierung zunächst entsprechend Figur 8 und 9 gekippt, gegriffen und dann in Richtung (7) aus dem Stützbeschlag (6) herausgezogen. Er wird dabei ein Stück vor und zurück geschwenkt, um mit dem Verbindungssteg (14) zunächst an dem Stützsockel (22) vorbeizukommen und dann durch den besagten Abstand zwischen Stützsockel (22) und Gegenhalter (24) einzutauchen und auf der Aufnahme (23) des Stützsockels (22) abgesetzt werden zu können. In dieser teilweise ausgezogenen Zwischenstellung (10) kann der Zurrbügel (5) am Stützsockel (22) abgestützt und gehalten werden.

Sobald die Zurrkräfte angreifen, wird der Zurrbügel (5) gemäß Figur 12 und 13 weiter in Ausziehrichtung (7) und in die Zurrstellung (9) gegen die Unterseite des Gegenhalters (24) gezogen. Durch den geringen Abstand zum Stützsockel (22) und dessen größere Auskraglänge kommt der Verbindungssteg (14) schnell zur Anlage und hat keine Gelegenheit für eine Ausweichbewegung.

Nach Entlastung kann der Zurrbügel (5) wieder abwärts bewegt und am Stützsockel (22) vorbeigeschwenkt werden. In der Ruhestellung (8) sitzt der Bügelkopf (11) wieder auf dem Gegenhalter (24) auf und verschließt die Öffnung (27).

Figur 14 bis 23 zeigen eine zweite Variante der Zurreinrichtung (1). Diese weist ebenfalls einen Stützbeschlag (6) und einen Zurrbügel (5) auf und ist bevorzugt für eine verborgene Anordnung bzw. versenkte Montage unterhalb einer Ladefläche (3) oder eines Rahmens (4) des Fahrzeugs ausgebildet. Die Zurreinrichtung (1) kann wie bei der ersten Variante eine Ruhestellung (8), eine ausgezogene Zurrstellung (9) und ggf. eine Zwischenstellung (10) einnehmen. Der Zurrbügel (5) kann hierfür wie in der ersten Variante bewegt und abgestützt werden.

Figur 14 und 15 zeigen die zweite Variante der Zurreinrichtung (1) in einer ausschnittsweise dargestellten Einbaulage an einem Fahrzeug (2), insbesondere einem Kipper bzw. einem Multifunktionsfahrzeug. In Figur 14 ist die ausgezogene Zurrstellung (9) oder eventuell auch Zwischenstellung (10) dargestellt. Der Zurrbügel (5) hat hier eine gerade Ausrichtung. Er weist wie bei der ersten Variante einen Bügelkopf (11) und einen Rückhalter (12) mit Seitenarmen (13) und einem unteren Steg (14) auf. Der Bügelhalter (12) kann eine ringartig geschlossene Form und eine zentrale Öffnung aufweisen. Der Zurrbügel (5) kann bei dieser Gestaltung wie bei der ersten Variante eine bewegliche Zurröse bilden.

In Figur 15 ist die Zurreinrichtung (1) von Figur 14 vergrößert und ohne die Ladefläche (3) und deren schlitzartige Öffnung (27) dargestellt. Außerdem ist der Zurrbügel (5) in einer gekippten Zurrstellung (9') dargestellt, in der er besser schräge Zugkräfte eines Zurrgeschirrs (nicht dargestellt) aufnehmen kann. Der Zurrbügel (5) kann sich hierbei mit seinem Rückhalter (12) gegenüber dem Gegenhalter (24) drehen.

Der Stützbeschlag (6) weist wie bei der ersten Variante einen Korpus (17) mit einer Stützwand (18), einem Gegenhalter (24) und einem Stützsockel (22) sowie einer kippfähigen Führung des Zurrbügels (5) in der Ruhestellung (8) auf. Der Korpus (17) weist an der Oberseite einen Ausschnitt (28) auf, der bevorzugt im Wesentlichen der Form und den Abmessungen der Öffnung (27) entspricht.

Im Unterschied zur ersten Variante ist die Stützwand (18) an der Vorderseite des Korpus (17) angeordnet und liegt in Einbaustellung nicht mit ihrer Hauptebene am Fahrzeug (2), insbesondere am Rahmen (4), an. Die Stützwand (18) hat eine geringere Höhe als in der ersten Variante und ist von der Befestigungsstelle am Fahrzeug (2) bzw. am Rahmen (4) distanziert. Der Korpus (17) hat in der Draufsicht eine gebogene C-Form und weist an den umgebogenen Korpusenden quer nach außen abstehende Stützarme (19) auf.

Die Montage und Befestigung des Stützbeschlags (6) am Fahrzeug (2), insbesondere am Rahmen (4), erfolgt gemäß Figur 15 über die freie Stirnwand der abstehenden Stützarme (19) und dortige Befestigungselemente (21). Die Stützwand (18) wird hierüber mittelbar befestigt.

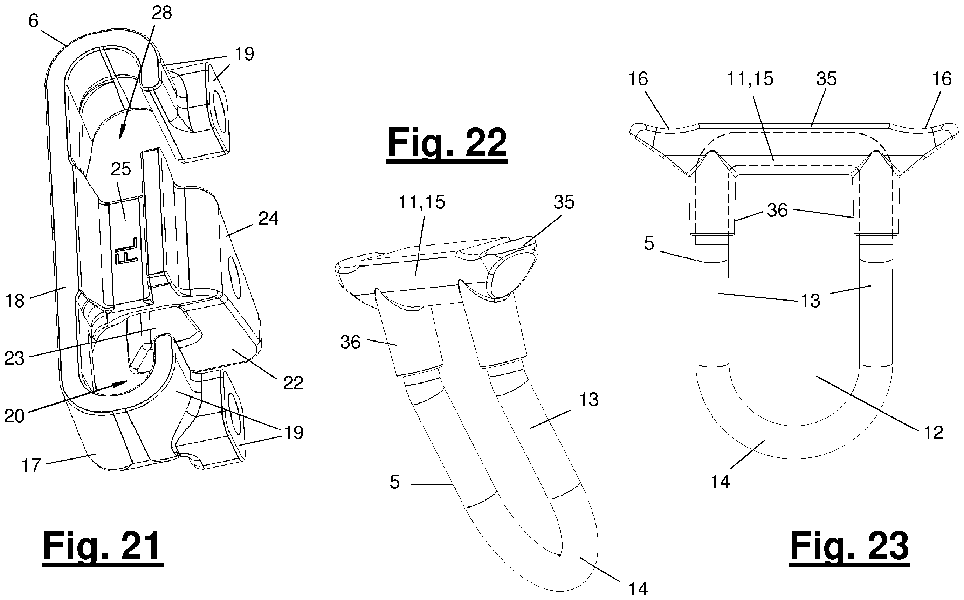

An der Stützwand (18) sind innenseitig der Gegenhalter (24) und der Stützsockel (22) befestigt, vorzugsweise angeformt. Der Gegenhalter (24) hat gemäß Figur 21 beidseits einen seitlichen Abstand zu den umgebogenen Korpusenden. Hierdurch kann der Stützbeschlag (6) mit dem Zurrbügel (5) in Eingriff bzw. Verbindung gebracht werden. Der Stützsockel (22) ist hängend am Gegenhalter (24) angeordnet. Er hat eine Lage unterhalb und mit seitlicher Distanz von der Stützwand (18).

Der Stützsockel (22) ist über einen aufrechten Steg mit dem Gegenhalter (24) verbunden. Der Gegenhalter (24) und insbesondere der besagte Steg können zur Befestigung und Anlage am Fahrzeug (2) herangezogen werden. Hierfür haben der Gegenhalter (24), der Stützsockel (22) und der besagte Steg eine ebene Stirnseite mit einer Durchgangsöffnung für ein Befestigungselement (21).

Der Gegenhalter (24) weist wie bei der ersten Variante eine obere Aufnahme (25) und eine untere Aufnahme (26) auf, die an den Zurrbügel (5), insbesondere an den Bügelkopf (11), und an den Zwischensteg (14) in der Formgebung angepasst sein können. Der Gegenhalter (24) stützt in der Ruhestellung (8) den Bügelkopf (11) mit seiner oberen Jochplatte (15) in Parallellage sowie bündig mit der Oberseite des Korpus (17) und vorzugsweise auch mit dem oberen Rand der Öffnung (27) ab. Hierbei sind die vorbeschriebenen Überstände (16) und die seitlichen Abstände zu den Seitenarmen (13) zur Bildung des Freiraums (20) vorhanden.

Die untere Aufnahme (26) kann eine gebogene Längserstreckung haben und dabei mit dem ebenfalls rund gebogenen Zwischensteg (14) korrespondieren. Durch diese Gestaltung kann die in Figur 15 gezeigte seitlich gekippte Zurrstellung (9') eingenommen werden.

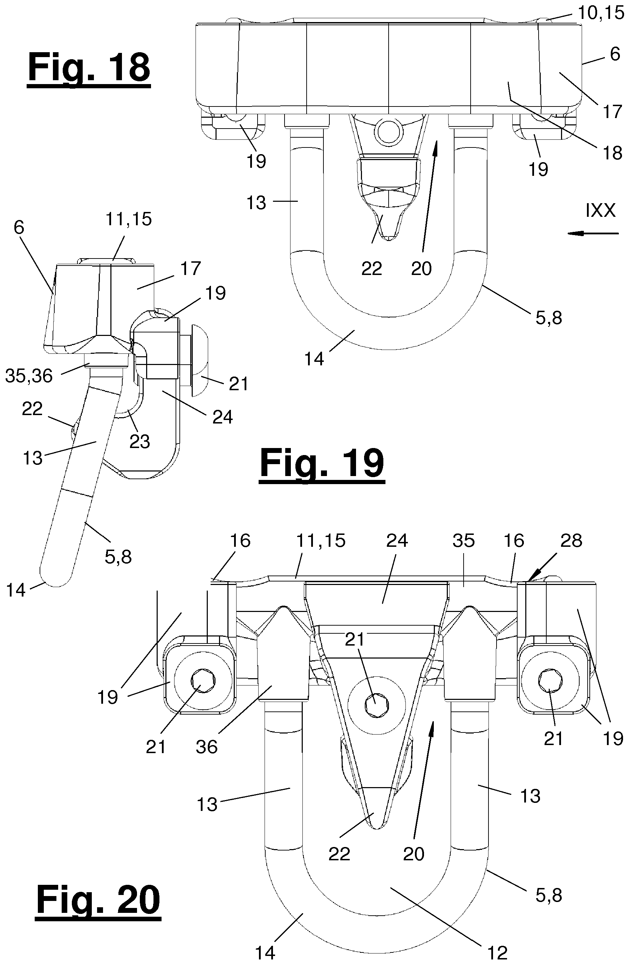

Der Zwischensockel (22) hat eine geringere Breite als der Gegenhalter (24) und bietet dadurch einen vergrößerten Abstand zu den Seitenarmen (13) und einen entsprechend großen Freiraum (20) für die seitlichen Kippbewegungen des Zurrbügels (5) quer zur Ausziehrichtung (7). In der zweiten Variante hat der Stützsockel (22) in der Draufsicht eine in Figur 18 und 19 dargestellte Keilform und verjüngt sich nach unten bzw. in Richtung entgegengesetzt zum darüber angeordneten Gegenhalter (24). Die Keilform begünstigt die seitliche Kippbewegung des Zurrbügels (5) noch weiter.

Der Gegenhalter (24) weist eine gegenüber dem Bügelkopf (11) verminderte Stützbreite auf, die den Zurrbügel (5) lokal beschränkt und seitlich kippfähig abstützt, wobei auch die seitlichen Abstände zu den Seitenarmen (13) und der besagte Freiraum (20) für die Kippbewegung vorhanden sind. Figur 20 verdeutlicht diese Ausbildung und Anordnung in der Ruhestellung (8). Durch einen dezentralen Druck von oben auf den Bügelkopf (11), insbesondere auf einen Überstand (16), kann der Zurrbügel (15) in der vorbeschriebenen Weise gekippt werden und eine gekippte Ruhestellung (8') wie in Figur 8 einnehmen. In dieser Ruhestellung (8') taucht das andere Ende des Bügelkopfs (11), insbesondere der dortige Überstand (16), aus dem Korpus (17) und aus der Öffnung (27) auf und steht mit Abstand über der Ladefläche (3) oder dem Rahmen (4). Der Zurrbügel (5) kann dadurch in der vorbeschriebenen Weise gegriffen und aus der Ruhestellung (8') herausgezogen werden.

Der Zurrbügel (5) kann auch bei der zweiten Variante in die vorbeschriebene Zwischenstellung (10) gebracht werden. Der Stützsockel (22) weist hierfür den vorbeschriebenen Abstand vom Gegenhalter (24) und auch einen vertikalen Abstand von der Stützwand (18) auf. Der Stützsockel (22) erstreckt sich seitlich in Richtung zur Stützwand (18). Er kann mit Abstand vor der Stützwand (18) enden.

Der in der zweiten Variante frei nach unten ragende Stützsockel (22) kann an der Unterseite eine Anschrägung haben, die beim Herausziehen des Zurrbügels (5) eine Leitfläche für den unteren Zwischensteg (14) bietet und das Herausziehen sowie eine eventuelle Schwenkbewegung in Ausziehrichtung (7) begünstigt. An der Oberseite weist der Stützsockel (22) die besagte Aufnahme (23) auf, die vorzugsweise nuten- oder rinnenförmig gestaltet ist und eine an den Verbindungssteg (14) zumindest im Querschnitt angepasste Formgebung haben kann. Durch den rund gebogenen Zwischensteg (14) ist dabei in der Zwischenstellung (10) eine seitliche Kippbewegung möglich. Hierbei kann sich der Zurrbügel (11) im Fußbereich am Stützsockel (22) und im Kopfbereich zusätzlich am Fahrzeug (2) oder am Korpus (17) abstützen.

Der Zurrbügel (11) besteht in den gezeigten Varianten im Wesentlichen aus einem hinreichend festen Material, das zur Aufnahme und Abstützung der Zurrkräfte geeignet ist. Vorzugsweise ist das Material ein Metall, insbesondere ein eisenhaltiges Metall, z.B. Stahl, Gusseisen oder dgl.. Der Stützbeschlag (6) kann ebenfalls aus einem solchen Material bestehen. Günstig ist dabei eine Ausbildung des Zurrbügels (5) und/oder des Stützbeschlags (6) aus einem Gussteil.

In der zweiten Variante ist eine Abwandlung zu dieser Form- und Materialwahl gezeigt, die auch bei der ersten Variante zum Einsatz kommen kann. Der Zurrbügel (5) kann zumindest bereichsweise eine Ummantelung (35) aus einem weicheren Material, insbesondere einem Kunststoff, aufweisen. Diese Ummantelung kann am Zurrbügel (5) in beliebiger Weise angebracht, insbesondere angespritzt oder in sonstiger Art angeformt werden. Vorzugsweise ist die Ummantelung (35) im Bereich des Bügelkopfs (11) angeordnet. Der Zurrbügel (5) besteht ansonsten aus dem vorgenannten festen Material.

Wie z.B. Figur 22 und 23 verdeutlichen, kann die Ummantelung (35) den gestrichelt dargestellten oberen Verbindungssteg zwischen den Seitenarmen (13) umschließen. Sie kann auch einen Kragen (36) am oberen Endbereich der Seitenarme (13) und an der Übergangsstelle zu dem besagten Zwischensteg bilden. Die Überstände (16) können vollständig auf dem Kunststoffmaterial bestehen. Sie können alternativ eine feste, insbesondere metallische, Seele aufweisen, wobei z.B. der obere Verbindungssteg seitlich über die Seitenarme (13) stummelartig hinausragt.

Abwandlungen der gezeigten und beschriebenen Ausführungsformen sind in verschiedener Weise möglich. Insbesondere können die Merkmale der vorbeschriebenen Ausführungsbeispiele und der Varianten beliebig miteinander kombiniert, insbesondere auch vertauscht werden.

In den gezeigten Ausführungsformen ist der Zurrbügel (5) nach unten versenkt angeordnet und kann mit einer im Wesentlichen vertikalen Richtungskomponente der Ausziehrichtung (7) ausgezogen und ggf. dabei etwas in Ausziehrichtung (7) geschwenkt werden. Alternativ kann die Zurreinrichtung (1) gedreht und seitlich am Randbereich der Ladefläche (3) oder des Rahmens (4) angeordnet sein, wobei sich eine horizontale oder schräge Ausziehrichtung (7) ergibt. Die Formgebung und Abstützfunktion des Stützbeschlags (6) können hierfür entsprechend angepasst und geändert werden.

Ferner ist es möglich, die Zurreinrichtung (1) auch an anderer Stelle eines Fahrzeugaufbaus unterzubringen. Sie kann in weiterer Abwandlung auch an einer anderen stationären oder instationären Boden- oder Ladefläche angeordnet werden, z.B. an einem Schiff oder Flugzeug oder an einem Container oder einer stationären Ladeplattform. Variabel ist auch die Formgebung des Rückhalters (12), die nicht ringförmig und schlossen sein muss, sondern eine andere für den Rückhalt und die Kippfähigkeit geeignete Formgebung, z.B. steg- oder hakenförmig, haben kann.

### BEZUGSZEICHENLISTE

- 1: Zurreinrichtung
- 2: Fahrzeug, Kipper
- 3: Ladefläche
- 4: Rahmen
- 5: Zurrbügel
- 6: Stützbeschlag
- 7: Ausziehrichtung
- 8: Ruhestellung
- 8': Ruhestellung gekippt
- 9: Zurrstellung ausgezogen, gerade
- 9': Zurrstellung ausgezogen, gekippt
- 10: Zwischenstellung ausgezogen
- 11: Bügelkopf
- 12: Rückhalter, Bügelring
- 13: Seitenarm, Bügelarm
- 14: Steg unten
- 15: Jochplatte oben
- 16: Überstand
- 17: Korpus
- 18: Stützwand
- 19: Stützarm
- 20: Freiraum
- 21: Befestigungselement
- 22: Stützsockel
- 23: Aufnahme, Nut
- 24: Gegenhalter
- 25: Aufnahme oben, Nut
- 26: Aufnahme unten, Nut
- 27: Öffnung, Schlitz
- 28: Ausnehmung, Ausschnitt
- 29: Chassis
- 30: Fahrwerk
- 31: Bordwand, Aufbauwand
- 32: Kippeinrichtung
- 33: Zugdeichsel
- 34: Längsachse
- 35: Ummantelung
- 36: Kragen

## Patentansprüche

1. Zurreinrichtung für ein Fahrzeug (2) mit einem am Fahrzeug (2) zu montierenden Stützbeschlag (6) und einem Zurrbügel (5), wobei der Stützbeschlag (6) für eine verborgene Anordnung am Fahrzeug (2) ausgebildet ist und der Zurrbügel (5) zwischen einer Ruhestellung (8) und einer ausgezogenen Zurrstellung (9) in Ausziehrichtung (7) längsbeweglich und ggf. schwenkbar am Stützbeschlag (6) geführt sowie gegen die Zurrkräfte am Stützbeschlag (6) abstützbar ist, **dadurch gekennzeichnet, dass** der Zurrbügel (5) in seiner Ruhestellung (8) am Stützbeschlag (6) abgestützt und dabei zur Seite hin quer zur Ausziehrichtung (7) kippfähig am Stützbeschlag (6) geführt ist.

2. Zurreinrichtung nach Anspruch 1, **dadurch gekennzeichnet, dass** der Zurrbügel (5) einen Bügelkopf (11) und darunter einen bevorzugt ringförmigen Rückhalter (12) aufweist, wobei der Bügelkopf (11) breiter als der Rückhalter (12) ist und einen seitlichen Überstand (16) aufweist.

3. Zurreinrichtung nach Anspruch 2, **dadurch gekennzeichnet, dass** der Zurrbügel (5) zwei am Bügelkopf (11) anschließende Seitenarme (13) und an deren unteren freien Enden einen geraden oder gebogenen Verbindungssteg (14) aufweist.

4. Zurreinrichtung nach Anspruch 2 oder 3, **dadurch gekennzeichnet, dass** die kippfähige Führung des Zurrbügels (5) am Stützbeschlag (6) in der Ruhestellung (8) derart ausgebildet ist, dass durch dezentralen Druck auf die Oberseite des Zurrbügels (5) der Bügelkopf (11) schräg gestellt und dadurch am Überstand (16) gegriffen und aus der Ruhestellung herausgezogen werden kann.

5. Zurreinrichtung nach einem der vorhergehenden Ansprüche, **dadurch gekennzeichnet, dass** der Stützbeschlag (6) einen Gegenhalter (24) zur Abstützung des Zurrbügels (5) in Ruhe- und Zurrstellung (8,9) aufweist, wobei der Gegenhalter (24) eine verminderte Stützbreite besitzt, die den Zurrbügel (5) lokal beschränkt und seitlich kippfähig abstützt.

6. Zurreinrichtung nach Anspruch 5, **dadurch gekennzeichnet, dass** der Stützbeschlag (6) einen mit Abstand unterhalb des Gegenhalters (24) angeordneten Stützsockel (22) für die untere Abstützung des Zurrbügels (5) in einer teilweise ausgezogenen Zwischenstellung (10) aufweist.

7. Zurreinrichtung nach Anspruch 5 oder 6, **dadurch gekennzeichnet, dass** der Gegenhalter (24) und der Stützsockel (22) in Ruhestellung (8) in der Öffnung des Rückhalters (12) und mit seitlichem Abstand zu Seitenarmen (13) des Rückhalters (12) angeordnet sind, wobei der Stützsockel (22) eine geringere Breite und einen größeren Abstand zu den Seitenarmen (13) als der Gegenhalter (24) aufweist.

8. Zurreinrichtung nach einem der Ansprüche 5 bis 7, **dadurch gekennzeichnet, dass** der Stützbeschlag (6) seitlich vom Gegenhalter (24) und vom Stützsockel (22) einen Freiraum (20) für eine Kippbewegung des Zurrbügels (5) aufweist.

9. Zurreinrichtung nach einem der vorhergehenden Ansprüche, **dadurch gekennzeichnet, dass** der Stützbeschlag (6) einen Korpus (17) mit dem Gegenhalter (24) und einem dort seitlich anschließenden Freiraum (20) aufweist.

10. Zurreinrichtung nach Anspruch 9, **dadurch gekennzeichnet, dass** der Korpus (17) des Stützbeschlags (6) eine Stützwand (18) und davon wegragende seitlich distanzierte Stützarme (19) aufweist.

11. Zurreinrichtung nach einem der vorhergehenden Ansprüche, **dadurch gekennzeichnet, dass** der Zurrbügel (5) im Bereich des Bügelkopfs (11) eine Ummantelung (35) aus Kunststoff aufweist.

12. Fahrzeug, insbesondere Anhänger, mit einer Ladefläche (3) und ggf. einem Rahmen (4) sowie einer in deren Bereich angeordneten Zurreinrichtung (1), wobei die Zurreinrichtung (1) einen verborgen am Fahrzeug (2) befestigten Stützbeschlag (6) und einen Zurrbügel (5) aufweist, der zwischen einer Ruhestellung (8) und einer ausgezogenen Zurrstellung (9) in Ausziehrichtung (7) längsbeweglich und ggf. schwenkbar am Stützbeschlag (6) geführt und abgestützt ist, **dadurch gekennzeichnet, dass** die Zurreinrichtung (1) nach einem der Ansprüche 1 bis 11 ausgebildet ist.

13. Fahrzeug nach Anspruch 12, **dadurch gekennzeichnet, dass** der Zurrbügel (5) in seiner Ruhestellung (8) in einer durchgehenden, Öffnung (27) an der Ladefläche (3) oder am Rahmen (4) versenkt aufgenommen ist.

14. Fahrzeug nach Anspruch 12 oder 13, **dadurch gekennzeichnet, dass** die Ladefläche (3) oder der Rahmen (4) eine bevorzugt schlitzartige Öffnung (27) für den Durchtritt des Zurrbügels (5) aufweist, die an dessen Bügelkopf (11) mit engem Abstand angepasst ist, wobei der Bügelkopf (11) in Ruhestellung (8) bündig mit der Oberseite der Ladefläche (3) oder des Rahmens (4) in der Öffnung (27) aufgenommen ist.

15. Fahrzeug nach einem der Ansprüche 12 bis 14, **dadurch gekennzeichnet, dass** das Fahrzeug (2) eine Kippeinrichtung (32) für die Ladefläche (3) aufweist.

## Claims

1. Tie-down device for a vehicle (2), with a supporting fitting (6), to be mounted on the vehicle (2), and a tie-down bracket (5), wherein the supporting fitting (6) is designed for a concealed arrangement on the vehicle (2) and the tie-down bracket (5) is guided so as to be longitudinally moveable in the pull-out direction (7) between a rest position (8) and a pulled-out tie-down position (9) and optionally pivotable on the supporting fitting (6) and can be supported against the tie-down forces on the supporting fitting (6), **characterized in that**, in its rest position (8), the tie-down bracket (5) is supported on the supporting fitting (6) and is thus guided on the supporting fitting (6) such that it can be tilted to the side transversely to the pull-out direction (7).

2. Tie-down device according to Claim 1, **characterized in that** the tie-down bracket (5) has a bracket head (11) and thereunder a preferably annular retainer (12), wherein the bracket head (11) is wider than the retainer (12) and has a lateral projection (16) .

3. Tie-down device according to Claim 2, **characterized in that** the tie-down bracket (5) has two lateral arms (13) adjoining the bracket head (11) and, at the lower free ends of said lateral arms, has a straight or curved connecting web (14).

4. Tie-down device according to Claim 2 or 3, **characterized in that** the tiltable guidance of the tie-down bracket (5) on the supporting fitting (6) in the rest position (8) is configured in such a manner that, by applying pressure off-centre to the top side of the tie-down bracket (5), the bracket head (11) can be positioned obliquely and thereby can be gripped at the projection (16) and pulled out of the rest position.

5. Tie-down device according to one of the preceding claims, **characterized in that** the supporting fitting (6) has a counter-holder (24) for supporting the tie-down bracket (5) in the rest and the tie-down position (8, 9), wherein the counter-holder (24) has a reduced supporting width that locally restricts the tie-down bracket (5) and supports said tie-down bracket such that it can be laterally tilted.

6. Tie-down device according to Claim 5, **characterized in that** the supporting fitting (6) has a supporting base (22), arranged underneath the counter-holder (24) at a distance therefrom, for the lower support of the tie-down bracket (5) in a partially pulled-out intermediate position (10).

7. Tie-down device according to Claim 5 or 6, **characterized in that**, in the rest position (8), the counter-holder (24) and the supporting base (22) are arranged in the opening of the retainer (12) and at a lateral distance from side arms (13) of the retainer (12), wherein the supporting base (22) has a smaller width and a greater distance from the lateral arms (13) than the counter-holder (24) .

8. Tie-down device according to one of Claims 5 to 7, **characterized in that**, laterally from the counter-holder (24) and from the supporting base (22), the supporting fitting (6) has a free space (20) for a tilting movement of the tie-down bracket (5).

9. Tie-down device according to one of the preceding claims, **characterized in that** the supporting fitting (6) has a body (17) with the counter-holder (24) and with a free space (20) laterally adjoining there.

10. Tie-down device according to Claim 9, **characterized in that** the body (17) of the supporting fitting (6) has a supporting wall (18) and supporting arms (19), at a lateral distance, protruding out therefrom.

11. Tie-down device according to one of the preceding claims, **characterized in that** the tie-down bracket (5) has an encasing (35) of plastic in the region of the bracket head (11).

12. Vehicle, in particular trailer, with a loading area (3) and optionally a frame (4) as well as a tie-down device (1) arranged in the region of said loading area, wherein the tie-down device (1) has a concealed supporting fitting (6) fastened on the vehicle (2) and a tie-down bracket (5) which is guided and supported so as to be longitudinally moveable in the pull-out direction (7) between a rest position (8) and a pulled-out tie-down position (9) and optionally pivotable on the supporting fitting (6), **characterized in that** the tie-down device (1) is designed according to one of Claims 1 to 11.

13. Vehicle according to Claim 12, **characterized in that**, in the rest position (8) of the tie-down bracket (5), said tie-down bracket is received in a recessed manner in a continuous opening (27) on the loading area (3) or on the frame (4).

14. Vehicle according to Claim 12 or 13, **characterized in that** the loading area (3) or the frame (4) has a preferably slot-like opening (27) for the tie-down bracket (5) to pass through, said opening being adapted to be a close distance from the bracket head (11) of said tie-down bracket, wherein, in the rest position (8), the bracket head (11) is received in the opening (27) in a manner flush with the top side of the loading area (3) or of the frame (4).

15. Vehicle according to one of Claims 12 to 14, **characterized in that** the vehicle (2) has a tilting device (32) for the loading area (3).

## Revendications

1. Dispositif d'arrimage pour un véhicule (2) comprenant une ferrure de support (6) devant être montée sur le véhicule (2) et un arceau d'arrimage (5), la ferrure de support (6) étant réalisée pour être disposée de manière dissimulée sur le véhicule (2) et l'arceau d'arrimage (5) étant guidé entre une position de repos (8) et une position d'arrimage sortie (9) de manière déplaçable longitudinalement dans la direction de sortie (7) et éventuellement de manière à pouvoir pivoter sur la ferrure de support (6) et pouvant être supporté sur la ferrure de support (6) à l'encontre des forces d'arrimage, **caractérisé en ce que** l'arceau d'arrimage (5), dans sa position de repos (8), est supporté sur la ferrure de support (6) et est ainsi guidé vers le côté transversalement à la direction de sortie (7) de manière à pouvoir basculer sur la ferrure de support (6).

2. Dispositif d'arrimage selon la revendication 1, **caractérisé en ce que** l'arceau d'arrimage (5) présente une tête d'arceau (11) et un élément de retenue (12) situé en dessous, de préférence en forme d'anneau, la tête d'arceau (11) étant plus large que l'élément de retenue (12) et présentant un surplomb latéral (16).

3. Dispositif d'arrimage selon la revendication 2, **caractérisé en ce que** l'arceau d'arrimage (5) présente deux bras latéraux (13) se raccordant à la tête d'arceau (11) et une barre de liaison (14) droite ou courbe au niveau de leurs extrémités inférieures libres.

4. Dispositif d'arrimage selon la revendication 2 ou 3, **caractérisé en ce que** le guidage basculant de l'arceau d'arrimage (5) sur la ferrure de support (6) est réalisé dans la position de repos (8) de telle sorte que par pression décentralisée sur le côté supérieur de l'arceau d'arrimage (5), la tête d'arceau (11) soit disposée obliquement et de ce fait puisse être saisie au niveau du surplomb (16) et puisse être ressortie de la position de repos.

5. Dispositif d'arrimage selon l'une quelconque des revendications précédentes, **caractérisé en ce que** la ferrure de support (6) présente un support conjugué (24) pour le support de l'arceau d'arrimage (5) dans les positions de repos et d'arrimage (8, 9), le support conjugué (24) possédant une largeur de support réduite, qui limite localement l'arceau d'arrimage (5) et qui le supporte de manière à ce qu'il puisse basculer latéralement.

6. Dispositif d'arrimage selon la revendication 5, **caractérisé en ce que** la ferrure de support (6) présente un socle de support (22) disposé à distance en dessous du support conjugué (24) pour le support inférieur de l'arceau d'arrimage (5) dans une position intermédiaire (10) en partie ressortie.

7. Dispositif d'arrimage selon la revendication 5 ou 6, **caractérisé en ce que** le support conjugué (24) et le socle de support (22), dans la position de repos (8), sont disposés dans l'ouverture de l'élément de retenue (12) et à distance latérale des bras latéraux (13) de l'élément de retenue (12), le socle de support (22) présentant une plus faible largeur et un plus grand espacement aux bras latéraux (13) que le support conjugué (24).

8. Dispositif d'arrimage selon l'une quelconque des revendications 5 à 7, **caractérisé en ce que** la ferrure de support (6) présente latéralement au support conjugué (24) et au socle de support (22) un espace libre (20) pour un mouvement de basculement de l'arceau d'arrimage (5).

9. Dispositif d'arrimage selon l'une quelconque des revendications précédentes, **caractérisé en ce que** la ferrure de support (6) présente un corps (17) avec le support conjugué (24) et un espace libre (20) s'y raccordant latéralement.

10. Dispositif d'arrimage selon la revendication 9, **caractérisé en ce que** le corps (17) de la ferrure de support (6) présente une paroi de support (18) et des bras de support (19) espacés latéralement faisant saillie depuis celle-ci.

11. Dispositif d'arrimage selon l'une quelconque des revendications précédentes, **caractérisé en ce que** l'arceau d'arrimage (5) présente dans la région de la tête d'arceau (11) un revêtement (35) en plastique.

12. Véhicule, en particulier remorque, comprenant une surface de chargement (3) et éventuellement un châssis (4) ainsi qu'un dispositif d'arrimage (1) disposé dans la région de ce dernier, le dispositif d'arrimage (1) présentant une ferrure de support (6) fixée de manière dissimulée sur le véhicule (2) et un arceau d'arrimage (5) qui est guidé et supporté entre une position de repos (8) et une position d'arrimage sortie (9) de manière déplaçable longitudinalement dans la direction de sortie (7) et éventuellement de manière à pouvoir pivoter sur la ferrure de support (6), **caractérisé en ce que** le dispositif d'arrimage (1) est réalisé selon l'une quelconque des revendications 1 à 11.

13. Véhicule selon la revendication 12, **caractérisé en ce que** l'arceau d'arrimage (5), dans sa position de repos (8), est reçu de manière renfoncée dans une ouverture traversante (27) au niveau de la surface de chargement (3) ou au niveau du châssis (4) .

14. Véhicule selon la revendication 12 ou 13, **caractérisé en ce que** la surface de chargement (3) ou le châssis (4) présente une ouverture (27), de préférence en forme de fente, pour le passage de l'arceau d'arrimage (5), laquelle est adaptée à faible distance à sa tête d'arceau (11), la tête d'arceau (11) étant reçue dans l'ouverture (27) dans la position de repos (8) en affleurement avec le côté supérieur de la surface de chargement (3) ou du châssis (4).

15. Véhicule selon l'une quelconque des revendications 12 à 14, **caractérisé en ce que** le véhicule (2) présente un dispositif de basculement (32) pour la surface de chargement (3).
